# EUROPEAN PATENT APPLICATION

(11) **EP 1 120 705 A2**
(43) Date of publication of application: **01.08.2001**
(21) Application number: 01300300.9
(22) Date of filing: 15.01.2001
(51) Int. Cl.: G06F 3/033

(54) **Information display method and system**

(30) Priority: 28.01.2000 JP 2000024720
(71) Applicant: SEIKO EPSON CORPORATION, Tokyo 160-0811 (JP)
(72) Inventor: Shima, Toshihiro, Suwa-shi, Nagano-ken (JP)
(74) Representative: Sturt, Clifford Mark

(57) **Abstract**

When a printer driver is activated, a display controller displays, on a display device, default major categories for a variety of print processing functions that are linked to other, related major categories (functions). When a desired major category, such as "host interface", is selected, the display controller enlarges a display area, for "host interface", and displays, in the enlarged display area, mid-level elements located immediately below "host interface". When a desired mid-level element, such as "network" is selected, the display controller enlarges a display area for "network", displays in the enlarged display area all the low-level elements located immediately under "network", and also enlarges the display area for "host interface", which includes the enlarged display area. At the same time, the display controller reduces the sizes of the display areas for the other major categories, and displays them on the display device, so that they are not hidden under the enlarged display area.

## Description

### BACKGROUND OF THE INVENTION

### 1. Field of the Invention

The present invention relates to an information display method, and relates in particular to the improvement of a graphic user interface (GUI) for browsing or editing various entries for information elements on the display screen of a computer, or for setting or confirming various conditions.

The present application is based on Japanese Patent Application No. 2000-24720, which is incorporated herein by reference.

### 2. Description of the Related Art

To establish a printing condition for a printer, for example, the user of a computer system generally activates a printer driver that has been loaded into a host computer, and enters settings for various function related information elements, such as paper direction, paper size and resolution, graphically provided on a screen displayed for the printer driver. These information elements are categorized hierarchically, and when, for example, a user desires to set "paper direction", the screen must be shifted from "printer property" and through "print style", until the setting for "paper direction" is displayed on the screen. In this case, a GUI such as is subsequently described is used for the display.

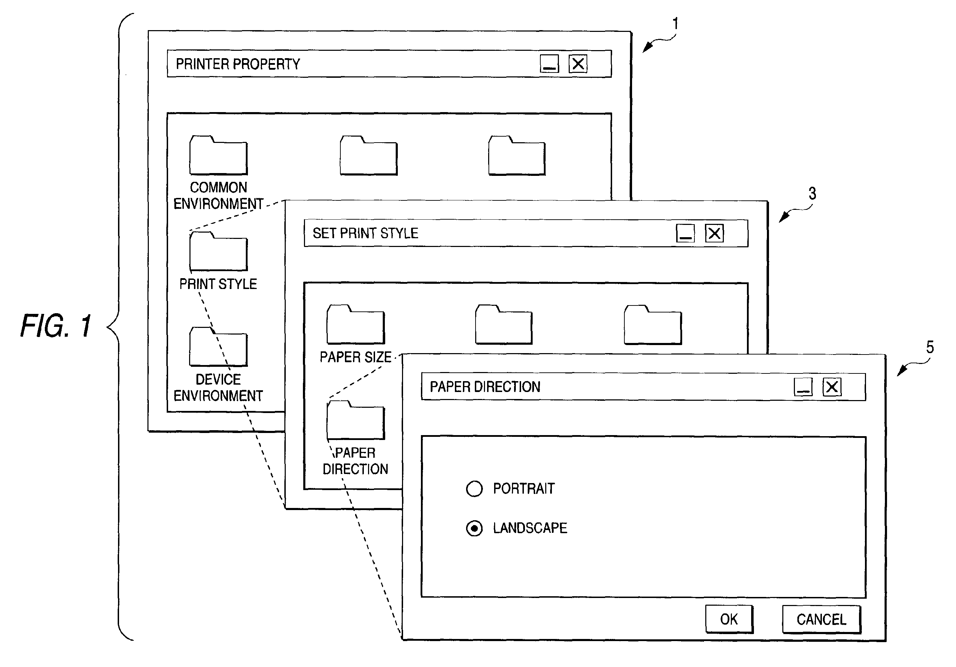

As is shown in Fig. 1, the printer driver opens, as the display at the top level, a "printer property" window 1, in which elements associated with "printer property" are displayed. Then, when from among these entries the user selects the entry for the element "print style", the printer driver opens a "print style" window 3 in which are displayed elements associated with "print style". Following this, when from among the associated elements the user selects "paper direction", a drop down menu 5 for setting "paper direction" is displayed.

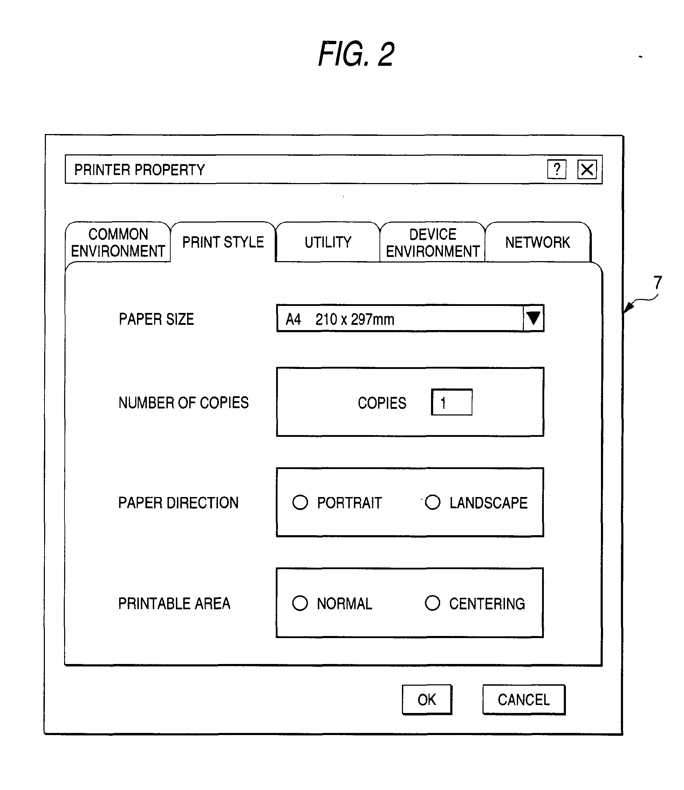

Or, as is shown in Fig. 2, the printer driver may open a "printer property" drop down menu 7 in which tabs are provided for elements related to "printer property". Following this, when the user selects a "print style" tab, entries for elements associated with "print style", including those for setting "paper size", "number of copies", "paper direction" and "printable area", are displayed.

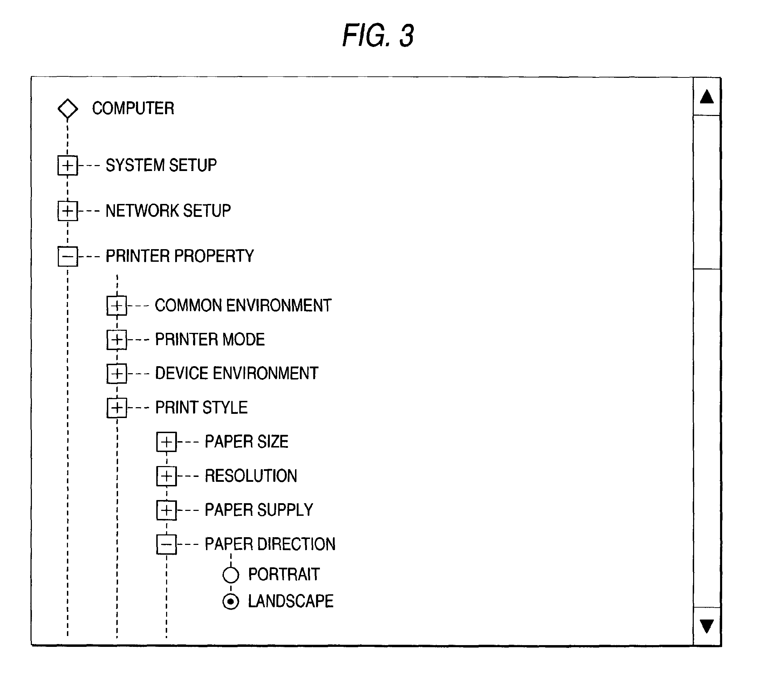

Rather than displaying a drop down menu, the printer driver, as is shown in Fig. 3, may display a hierarchical tree containing certain entries, such as for the Windows 95 program, Explorer. Then, when as an example the user selects "printer property", the printer driver will display, in a column beginning immediately below the heading "printer property", a list of entries for associated elements. Thereafter, after the user selects and designates "print style", in a column beginning directly below "print style" a list of associated elements will be displayed, following which, if the user selects the entry "paper direction", the host computer will display radio buttons for setting the printing direction (or may, instead, display a drop down menu).

Regardless of the display types in Figs. 1 to 3, a troublesome operation is required of a user who intends to set a print condition for a desired element, while concurrently acquiring an understanding of other print conditions. Specifically, for the display type in Fig. 1, other elements must also be selected in order to open, close, or to move a pertinent window or a drop down menu, or to reduce the size of a drop down menu itself. For the display type in Fig. 2, the tag for another element must be selected in order to display the setup state for the various print conditions for the pertinent element, and the setup state must be stored before setting the condition for a desired element. For the display type in Fig. 3, other elements must be selected and corresponding lists must be displayed. Further, when the lists that are displayed are too long, the screen must be scrolled vertically in order to confirm the setups for the individual elements. These troublesome operations seem to be even more complicated when a user is not aware of the category (the level) to which a desired element belongs, and must perforce search for it.

In addition, regardless of the display types in Figs. 1 to 3, since data for the elements that can be set are merely listed in a window, the relationships and the relevancy of various elements are hard to grasp.

### SUMMARY OF THE INVENTION

It is, therefore, one objective of the present invention to provide a GUI whereby, when the browsing or editing of data on a computer display screen is to be performed or various conditions are to be set or confirmed, conditions set for elements can be easily identified and an understanding of the relationships or the relevancy of various other elements can be easily deduced.

To achieve the above objective, according to one aspect of the invention, an information display system comprises:
means for providing, on the screen of a computer, default sized display areas for the display of detailed information for a plurality of elements;
means for enlarging a corresponding, default sized display area when a user selects an element from the plurality of elements;
means for displaying detailed information for the selected element in the enlarged, corresponding display area; and
means for also displaying, on the screen, those elements that were not selected so that none of the elements are hidden under the enlarged, corresponding display area.

According to the present invention, the display area for the element selected by the user is enlarged and the detailed information is displayed, while all the other elements are so displayed that they are not hidden by the enlarged display area, i.e., so that they do not disappear from the display screen. Thus, a user can refer to other elements while reading the detailed information for the one that was selected.

According to this aspect, the means for displaying the remaining, unselected elements includes:
means for reducing the sizes of the default sized display areas for the remaining, unselected elements and for summarizing the contents displayed therein.

According to this aspect, the means for displaying the remaining, unselected elements includes:
means for adjusting the sizes of the display areas of the remaining, unselected elements to reflect the magnitude of the relevancy of the remaining, unselected elements to the selected element. The magnitude of the relevancy of an unselected element can depend, for example, on the distance the element is from the one that has been selected, or on the order in which preceding elements have been selected by a user.

According to this aspect, the information display system further comprises means for, when one of the plurality of elements is selected, adjusting the arrangement on the display screen of the display areas for the plurality of elements.

According to this aspect, an element that is related to an objective or the needs of the user is included in the plurality of elements.

Features and advantages of the invention will be evident from the following detailed description of the preferred embodiments described in conjunction with the attached drawings.

### BRIEF DESCRIPTION OF THE DRAWINGS

In the accompanying drawings:
Fig. 1 is a diagram showing an example of a conventional GUI for setting a printing condition;
Fig. 2 is a diagram showing another example of a conventional GUI for setting a printing condition;
Fig. 3 is a diagram showing an additional example of a conventional GUI for setting a printing condition;
Fig. 4 is a block diagram showing the general arrangement of an information display system according to one embodiment wherein the present invention is applied for a GUI for setting or confirming the printing condition for a printer driver;
Fig. 5 is a diagram showing an example printing environment setting screen displayed on a display device 17;
Fig. 6 is a diagram showing a screen when a major category, "host interface", is selected in Fig. 5;
Fig. 7 is a diagram showing a screen when a mid-level element, "network", is selected in Fig. 6;
Fig. 8 is a diagram showing a screen when another major category, "printing process", is selected after a setting pin 25 has been displayed;
Fig. 9 is a diagram showing a screen when a major category, "printing process", is selected in Fig. 5;
Fig. 10 is a diagram showing a screen when a mid-level element, "coloring process", is selected in Fig. 9;
Fig. 11 is a diagram showing a screen when a mid-level element, "contrast", is selected in Fig. 10;
Fig. 12 is a flowchart showing the GUI control processing performed by a display controller 15;
Fig. 13 is a diagram showing an example screen when the area displayed for an entry spatially distant from a selected entry is smaller;
Fig. 14 is a diagram showing an example screen when the size of the area displayed for a previously selected element is reduced;
Fig. 15 is a diagram showing an example screen when, based on the order in which processes are performed by the GUI, the sizes of areas displayed for elements are smaller;
Fig. 16 is a diagram showing one variation of a screen structure for setting or confirming a printing environment;
Fig. 17 is a diagram showing a screen when "perform more environmentally friendly printing" is selected in Fig. 16;
Fig. 18 is a diagram showing another variation for the screen structure for the setting or the confirmation of a printing environment;
Fig. 19 is a diagram showing a screen when a mid-level element "perform more environmentally friendly printing" is selected in Fig. 18; and
Fig. 20 is a diagram showing a screen when the mid-term element "print faster" is selected in Fig. 18 or 19.

### DETAILED DESCRIPTION OF THE PREFERRED EMBODIMENTS

An information display system according to this invention can be applied for any type of GUI that includes provisions for browsing or editing data, or that enables the setting or confirmation of various elements of information on the display screen of a computer. An explanation will now be given for an embodiment of the invention that is applied for an information display system for a printer driver GUI.

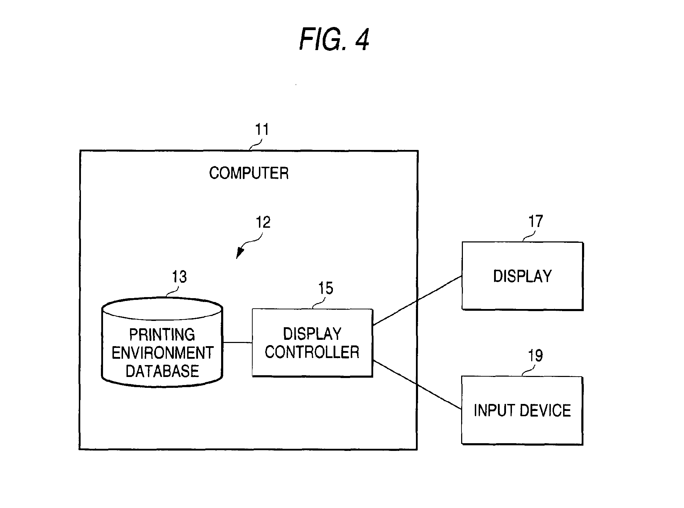

Fig. 4 is a diagram showing the general configuration of an information display system according to the embodiment of the invention, wherein the invention is applied for a GUI used to set or confirm the printing status of a printer driver.

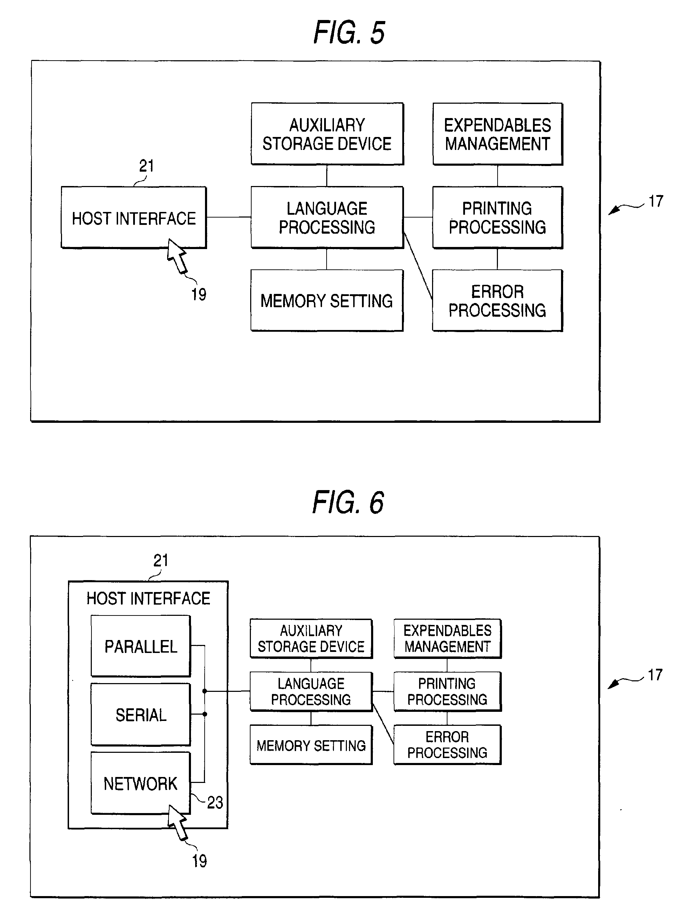

A display device 17 and an input device 19, such as a mouse, are connected to a computer 11. Printer driver software 12 is installed in the computer 11, and included in the printer driver software 12 is a printing environment database 13, which provides for the storage of various printing environment associated data, and a display controller 15, for accessing the printing environment database 13 and for displaying on the display device 15 a screen for setting or confirming a printing environment condition or a printing condition. In the printing environment database 13, data constituting printing conditions are assigned to various major database categories that are then hierarchically broken down to provide mid-level and low-level elements. The display controller 15 accesses the printing environment database 13, and displays on the display device 17, as default settings, entries representing the major database categories . Then, when a user employs the input device 9 and selects the entry for one of the major categories, the display controller 15 reads from the printing environment database 13 data for the mid-level elements of the major category that was selected, enlarges the display for the entry for the selected major category and displays the data for the mid-level elements, and reduces the sizes of the display areas for the other major category entries. That is, the display controller 15 enlarges the display area for a significant entry in order to display a larger amount of information, and reduces the display areas for less significant entries. This processing will be described in detail while referring to Figs. 5 to 8.

As is shown in Fig. 5, when the printer driver is activated, of the various printing related entries, default entries for major categories, such as "host interface", "auxiliary storage device", "language processing", "memory setting", "expendables management", "printing processing" and "error processing", are displayed on the screen of the display device 17. The major categories for these default entries are hierarchically positioned at the top (or extremely close to the top) of the various elements that are stored in the printing environment database 13, and refer to various printing process related functions. The major related categories (functions) are connected to each other by lines, so that at a glance, a user can obtain an overview of the printing process functional relationships and the correlation of the individual functions.

Assume that on this display screen a user selects a major category entry, "host interface", by positioning the cursor for a mouse 19 over a display area 21 for the desired major category and clicking or double-clicking the mouse 19. As a result of this operation, the display controller 15 reads, from the printing environment database 13, data for all of the mid-level elements directly below the major category "host interface", enlarges the display area 21 for "host interface", and displays the mid-level elements in the display area 21.

Specifically, as is shown in Fig. 6, the display area 21 for "host interface" is enlarged, as in an animated sequence, and entries for the mid-level elements directly below the major category "host interface", such as "parallel", "serial" and "network", are displayed in the enlarged display area 21.

When the user selects one of the entries for the mid-level elements, such as "network", on the display screen, similarly, the display controller 15 reads, from the printing environment database 13, data for low-level elements directly below the mid-level element "network", enlarges a display area 23 for "network" and displays all the low-level elements in the enlarged display area 23. At the same time, the display area 21 for the major category entry "host interface", which includes the display area 23 for the mid-level element "network", is further enlarged so as to provide space for the enlarged display area 23 for "network", while the display areas for the other major category entries that do not include "network" are again reduced.

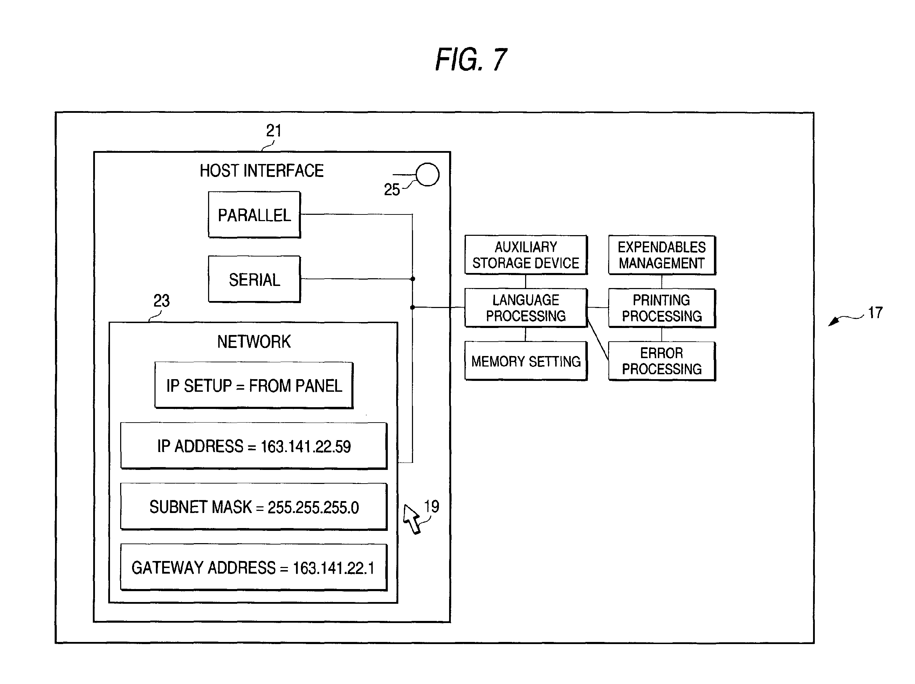

Specifically, as is shown in Fig. 7, the display area 23 for "network" is enlarged, as in an animated sequence, and all the low-level elements in the level directly below "network", such as "IP Address", "Subnet Mask" and "Gateway Address", and their setting states, are displayed. At the same time, the display area for "host interface", which includes the display area 23 for "network", is further enlarged, and the display areas (or the display areas and font sizes) of the other major category entries that were not selected by the user are reduced, as in an animated sequence, and are displayed so they do not overlap the enlarged display areas 21 and 23. During the reduction in size of the display areas for the major category entries that are displayed as a default, i.e., the major category entries that are displayed as shown in Fig. 5, the display controller reduces the display areas to the minimum size that will permit a user to select the entries for the major categories while ensuring that the lines showing how the major categories are correlated are fully visible.

From the screen in Fig. 7 a user can understand how the selected entries for the "network" element and other elements are correlated, and he or she can set or confirm the parameters for the entries for the individual elements in "network". Then, when the user selects the entry displayed for a mid-level element, such as "parallel" or "serial", the display controller 15 enlarges the display area for the selected mid-level element, and either reduces the currently enlarged display area 23 for the mid-level element "network" or further enlarges the display area 21 for the major category entry "host interface" in Fig. 7, while further reducing the display areas for the other major entries in order not to reduce the display area 23 for "network" . When the user selects another major category entry, such as "auxiliary storage device", "language processing" or "memory setting", on the display screen in Fig. 7, the display controller 15 enlarges the display area of the selected element entry, and reduces the display area 23 for the mid-level element "network" and the display area 21 for the major category "host interface", which currently are enlarged. As another method, even when another major category entry is not selected, once the cursor of the mouse 19 is moved outside the display area 21 for the major category entry "host interface", the display controller 15 may immediately reduce, as in an animated sequence, the display area 21 for "host interface", and display the default screen shown in Fig. 5.

In this embodiment, a function is also provided whereby a user can set or confirm a printing condition for another major category entry while maintaining, as on the screen in Fig. 7, the enlarged display area 21 for the major category entry "host interface". Specifically, when the user performs a predetermined manipulation (the double-clicking of the mouse 19) while leaving the cursor of the mouse 19 at an arbitrary location in the enlarged display area 21 for "host interface", a setting pin 25 is displayed (stack) at an appropriate location (the upper right, in this embodiment) in the display area 21 for "host interface". In principle, the display area 21 for "host interface", which is pierced by the setting pin 25, will not be enlarged or reduced even when another major category entry or the unenlarged mid-level element "parallel" or "serial", included in the display area 21, is selected, and at least, the data when the setting pin 25 pierced the display is constantly displayed in the display area 21.

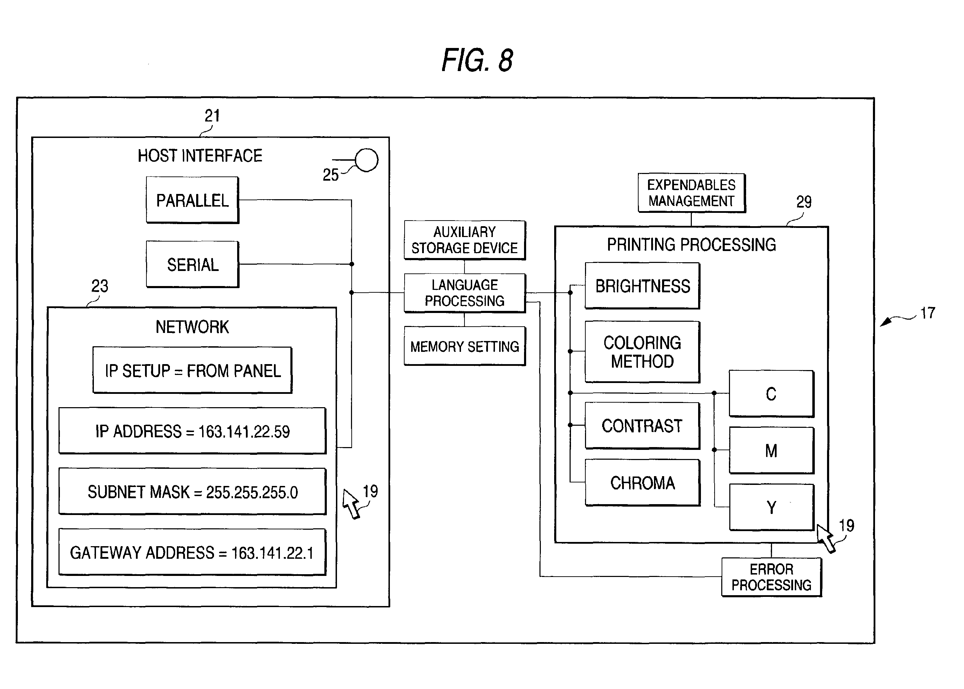

Specifically, as is shown in Fig. 8, even when the user selects another major category entry, such as "printing processing", and a display area 29 is enlarged, the size of the display area 21 for "host interface", which is pierced by the setting pin 25, is not reduced. As an exception, for a case wherein, unless the display area for an entry pierced with the setting pin is reduced, the display area for another selected major category entry can not be satisfactorily enlarged to enable the display of the contents of the currently selected entry, the size of the display area pierced by the setting pin 25 is reduced to permit the enlargement of the currently selected display area (when the display area is pierced by the setting pin 25, its size is reduced while the size of the contents that are displayed is maintained).

The setting pin 25 can be used to pierce the display area of any entry. For example, in Fig. 7, the setting pin 25 can stuck into the enlarged display area 23 for the mid-level element "network". And then, when another mid-level element, such as "parallel" or "serial", is selected in the display area 21 for "host interface", the display area of the selected mid-level element will be enlarged while the size of the display area 23 for "network", which is pierced by the setting pin 25, is maintained. Thus, the display area 21 for the major category "host interface" is further enlarged.

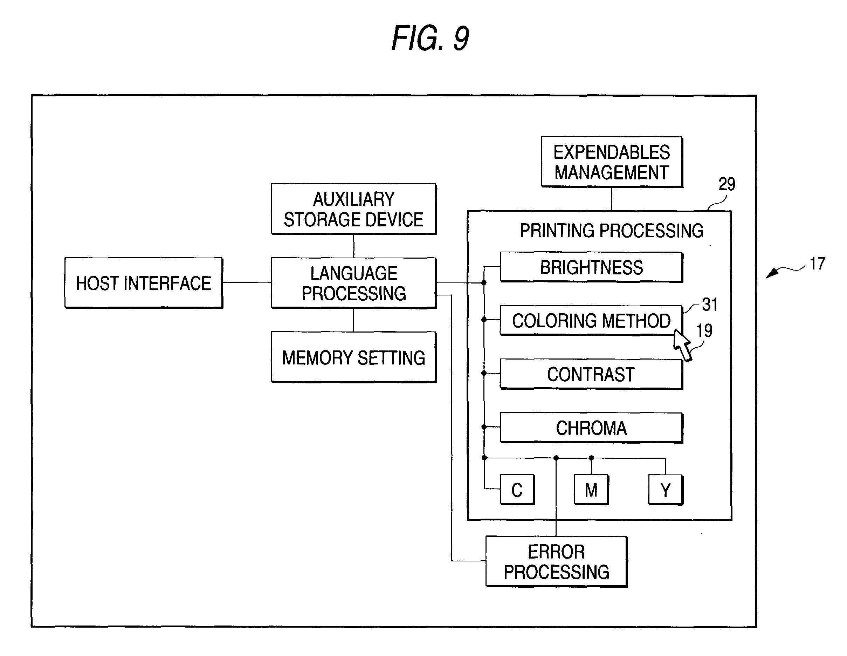

In this embodiment, a change in a GUI associated with an operation performed by a user will now be explained by using an example wherein "printing process" is selected on the default screen in Fig. 5, while referring to Figs. 9 to 11.

When the user selects the major category entry "printing processing" on the default screen in Fig. 5, as is shown in Fig. 9, the display controller 15 reads, from the printing environment database 13, data formid-level elements immediately below the major category element "printing process", enlarges the display area 29 for "printing processing" and displays such mid-level elements as "brightness", "coloring method", "contrast", "chroma", "C (Cyan)", "M (Magenta) "and"Y (Yellow)".

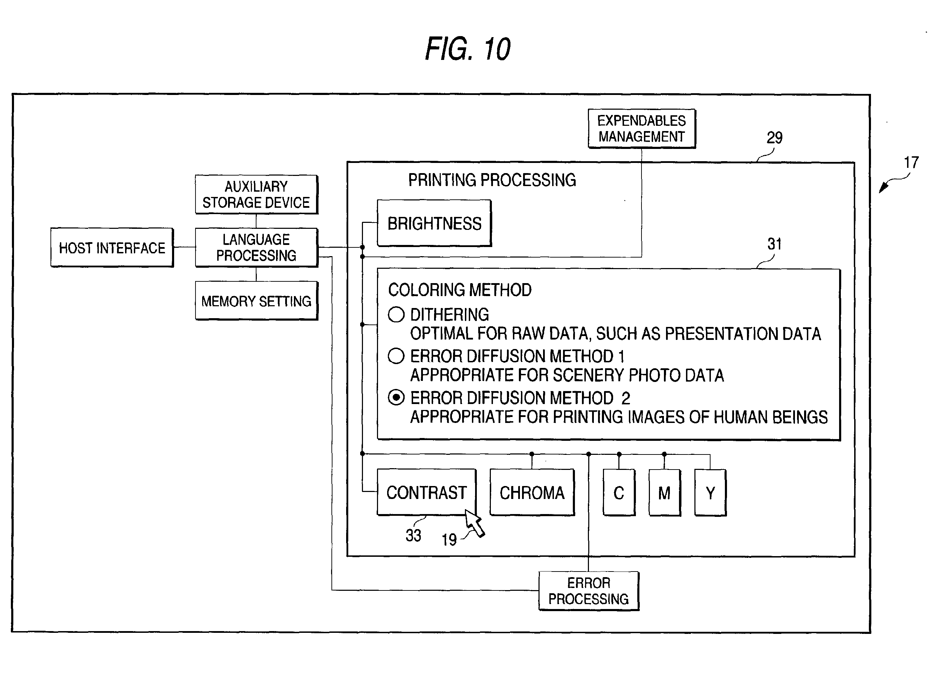

When the user selects the mid-level element "coloring method" on the display screen, as is shown in Fig. 10, a display area 31 for "coloring method" is displayed, and choices for "coloring method", which are low-level elements such as "dithering", "error diffusion method1", "error diffusion method 2" and explanatory sentences for the individual coloring methods, are displayed. At the same time, the sizes of the display areas for the other mid-level elements that are not selected by the user are reduced. On the screen in Fig. 10, the user who needs the "coloring method" can select an appropriate coloring method by referring to the explanatory sentences for the individual coloring methods. Also, the user can identify the other mid-level elements belonging to "printing processing" and major category entries other than "printing processing".

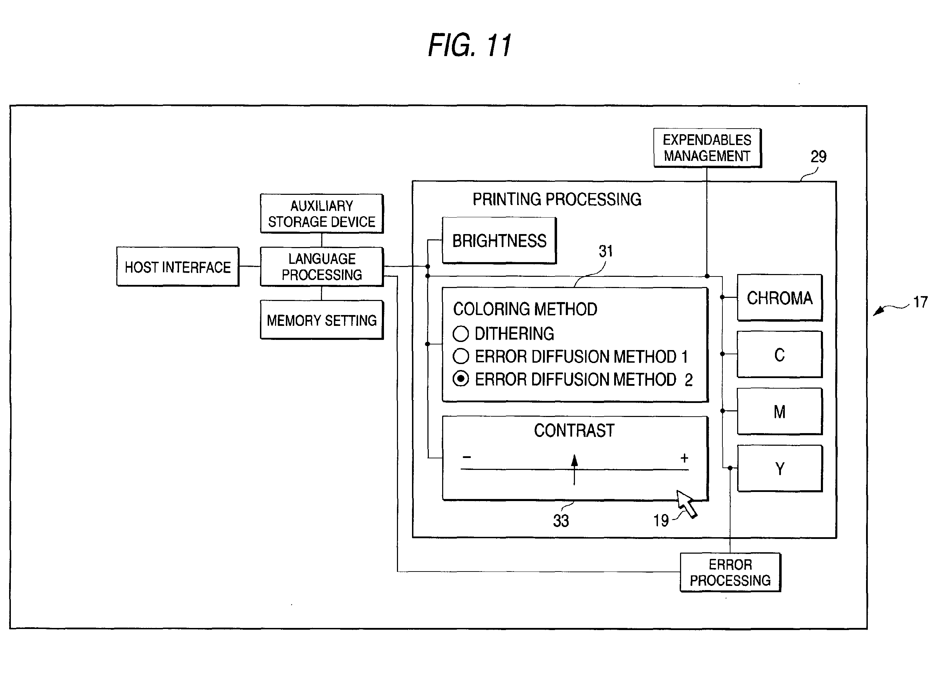

When the user then selects mid-level element "contrast" on the display screen in Fig. 10, as is shown in Fig. 11, a display area 33 for "contrast" is enlarged, and a contrast adjustment bar, a small representation, is displayed in the enlarged display area 33. At this time, in the enlarged display area 31 for the mid-level element "coloring method", explanatory sentences that are not needed for the selection of the coloring methods disappear and only those that are needed when choosing the coloring method are maintained in a reduced size. Thus, the user can set the contrast, while confirming the selected coloring method.

As is described above, according to this embodiment, while the user monitors the overall setup of the GUI elements of a printer driver, and confirms the details of a selected element, he or she can operate the printer driver.

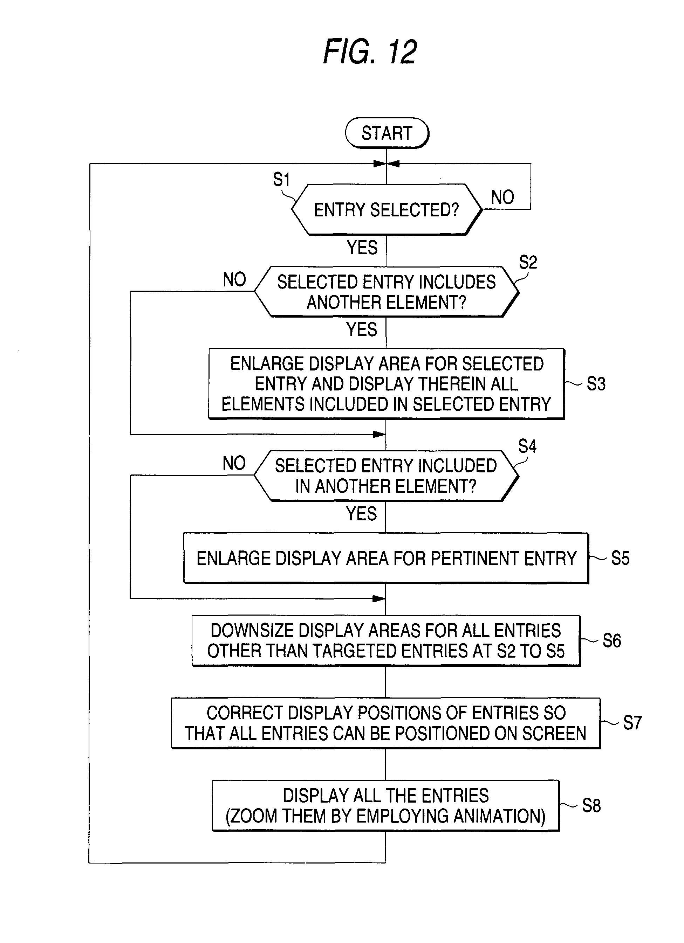

Fig. 12 is a flowchart showing the GUI control processing performed by the display controller 15.

When the user selects one element entry (an object) of those displayed by the GUI (Y at step S1), and when there is an element that belongs to the level immediately below the selected element entry, i.e., when the selected element entry includes another element (Y at step S2), the display area for the selected element entry is enlarged, and all the elements included in the selected element entry are displayed in the enlarged display area (S3). When the selected element entry is included in an element at an immediately higher level (Y at step S4), the display area for the element at the higher level is further enlarged so as to include the enlarged entry (S5). Steps S4 and S5 are recurrently performed. That is, when the element enlarged at step S5 is included in another element, the display area for this element is enlarged so as to include the display area for the element enlarged at step S5.

Thereafter, the display controller 15 reduces, as needed, the sizes of the display areas for all the elements other than the one selected at steps S2 to S5 (S6). Then, positions of all the elements to be displayed (at least, the default elements) are corrected, so that they can be shown on the display screen (S7), and these elements are displayed (S8). For the enlargement and reduction of the size of the display area, as previously described, the display areas for the selected element and the higher level element that includes it are enlarged, as in an animated sequence, and the sizes of the display areas for the other elements are reduced, again as in an animated sequence.

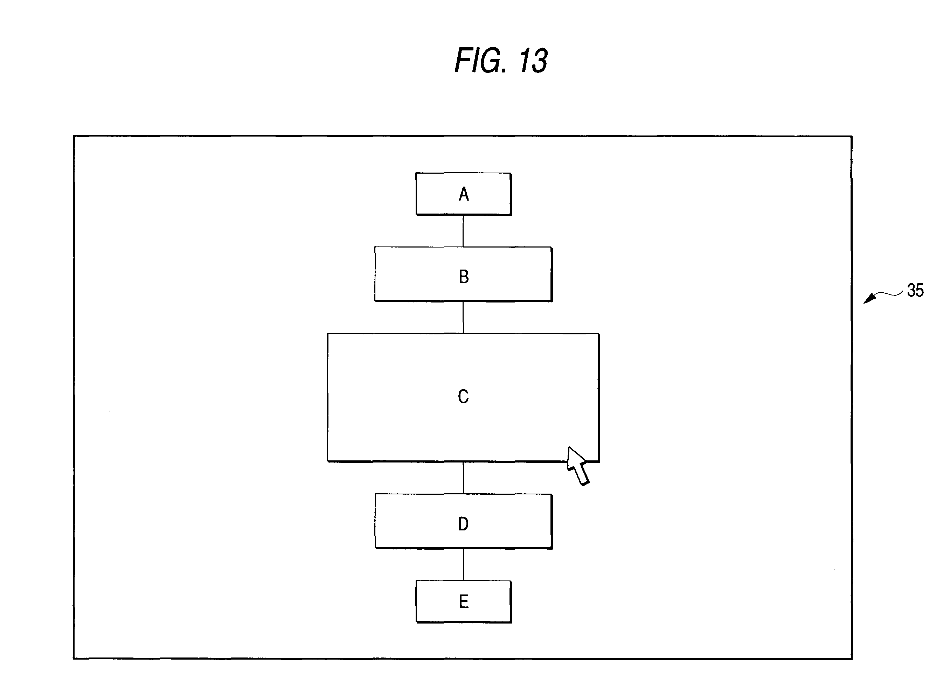

The size for the enlargement or the reduction of an entry on the display can be determined by one of the following three methods, which will now be described while referring to Figs. 13 to 15. In Figs. 13 to 15, five entries "A", "B", "C", "D" and "E" are displayed on a display device 35, and are correlated with each other as indicated by lines ("A", "B", "C", "D" and "E" represent the steps, performed in the same order, during the printing processing).

As a first method, the area of an element entry selected by a user is the largest that is displayed, and that of an entry that is spatially farthest from the one selected, i.e., the size of an entry for an element that is least relevant to the selected element, is the smallest. For example, as is shown in Fig. 13, when the user selects element entry C, the area of element entry C is the largest, the areas of the entries A and E, which are the farthest from C, are the smallest, and the areas of entries B and D, which are nearer C, are larger than A and E and smaller than C.

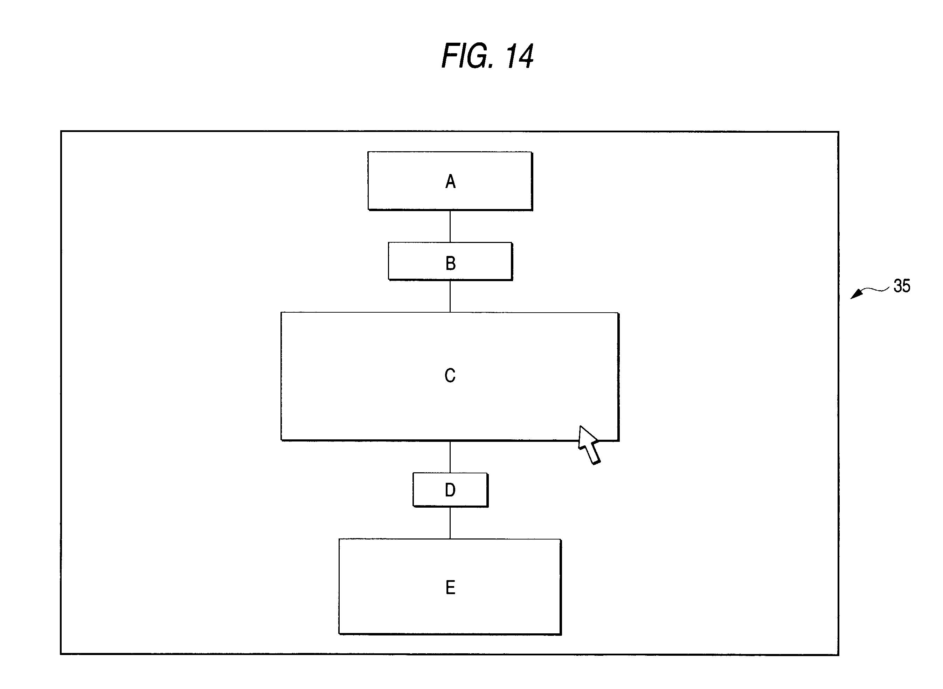

As a second method, the area displayed for the oldest element entry that was selected by a user is the smallest. For example, as is shown in Fig. 14, when the user selects, in the named order, "D", "B", "A", "E" and "C", the size of the area displayed by the display controller 15 for C, the latest selected entry, is the largest, and the sizes of the areas of the previously selected entries E, A, B and D are gradually reduced, relative to C, so that the size of the area for D, the oldest selected element, is the smallest.

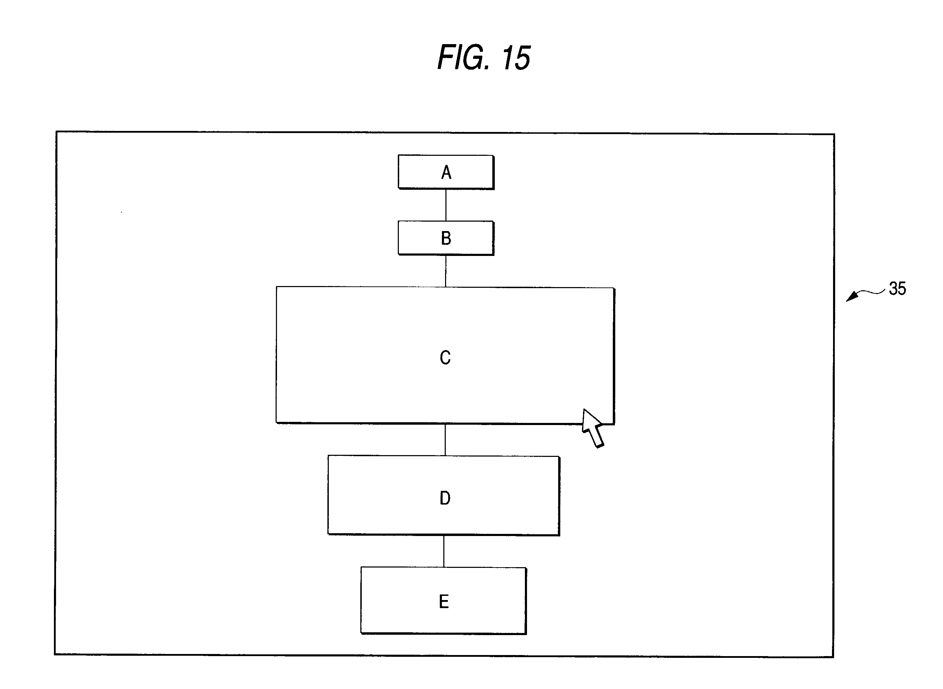

As a third method, based on the order in which processes are performed by the GUI, the sizes of areas displayed for downstream entries (i.e., entries for future processes) are smaller the farther they are from a selected element entry. Specifically, as is shown in Fig. 15, when the user selects entry C, the area displayed by the display controller 15 for entry C is the largest, and the areas displayed, in the order of processing, for downstream entries D and E are smaller. While the areas displayed for the entries upstreamof the selected element entry C, the entries A and B (i.e., entries for previously selected procedures), are the smallest.

According to the above described embodiment for setting print conditions, the display area for an element the user selects is enlarged and a number of data are displayed therein, while the display of an area for another entry is automatically reduced in size. Even when the size of a display area is reduced, however, the correlation of the individual entries continues to be displayed, and for an element entry displayed at a short distance from a currently targeted entry, or for an entry that was targeted just previously, the minimum information concerning the pertinent entry (the GUI for setting a minimum required condition for the entry) is displayed. Therefore, for setting a print condition for a desired element entry, the user need not perform such troublesome operations as closing, moving or downsizing other unnecessary windows or dialogue boxes, or the selection of a tag for changing the screen or for vertically scrolling the screen to read a relevant entry and to confirm a print condition, so that a user can smoothly set or confirm the print condition for a desired element.

In the above embodiment, several variations can be employed for the screen structure relative to the element entries to be displayed on the screen and the categories and the hierarchical correlation of these entries.

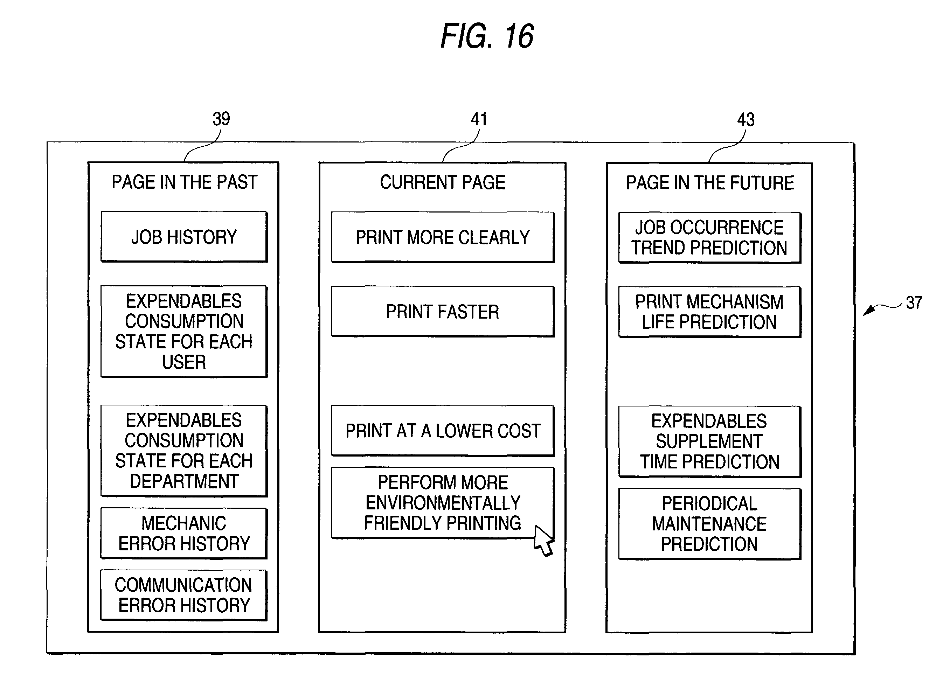

Fig. 16 is a diagram showing one variation of the screen structure provided by using the setting and the confirmation of the printing environment for the printer driver.

On a screen 37 in Fig. 16, various entries for setting or confirming the printing environment are displayed in accordance with the categories, past, present and future, based on the time order. Specifically, the screen 37 roughly consists of three element entries: "page in the past", "current page" and "page in the future". Mid-level elements, for the browsing of various information elements concerning printing performed in the past, such as "job history", "expendable consumption state for each user", "expendable consumption state for each department", "mechanic error history" and "communication error history", are displayed in a display area 39 for "page in the past". Mid-level elements, related to the objective or the needs of a user for a current printing process, such as "print more clearly", "print faster", "print at lower cost" and "perform more environmentally friendly printing", are displayed in a display area 41 for "current page". And mid-level elements, for the browsing of various matters that are predicted for printing in the future, such as "job occurrence trend prediction", "printing mechanism life prediction", "expendable supplementation time prediction" and "periodical maintenance time prediction", are displayed in a display area 43 for "page in the future".

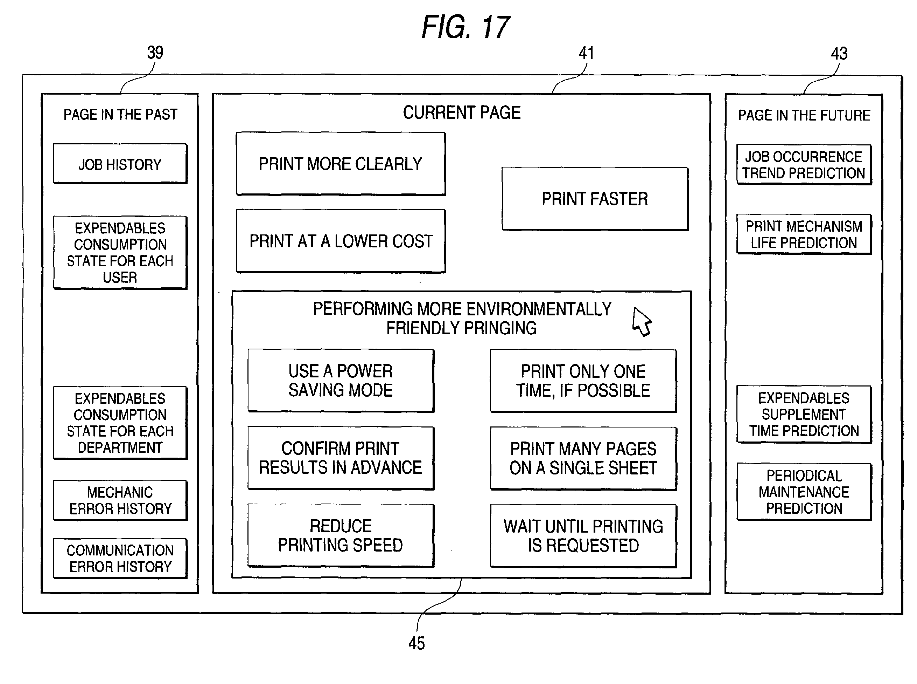

On this screen 37, when a user selects "perform more environmentally friendly printing" in the display area 41 for "current page", as is shown in Fig. 17, a display area 45 for "perform more environmentally friendly printing" is enlarged, and accordingly, the display area 41 for "current page" is enlarged, while the sizes of the display area 39, for "page in the past", and the display area 43, for "page in the future", which are not relevant to the selected element, are reduced. Low-level elements, which are related to the objective or the needs of the user to set a condition to provide a friendlier printing environment, i.e., "use power saving mode", "print only one time, if possible", "confirm print results in advance", "print many pages on a single sheet", "reduce printing speed" and "wait until printing is requested" are displayed in the enlarged display area 45 for "perform more environmentally friendly printing".

According to this variation, since various elements for setting or confirming the printing environment are distributed for handling in the past, the present and the future, inaccordance with the time aspect, the user can easily find a desired element and smoothly set or confirm the printing environment. Further, since an element for the setting of the printing environment is prepared for each objective or need of a user (i.e., the elements related to the objective or the needs of the user are prepared), the user can very easily set the printing environment in accordance with his or her objective or needs.

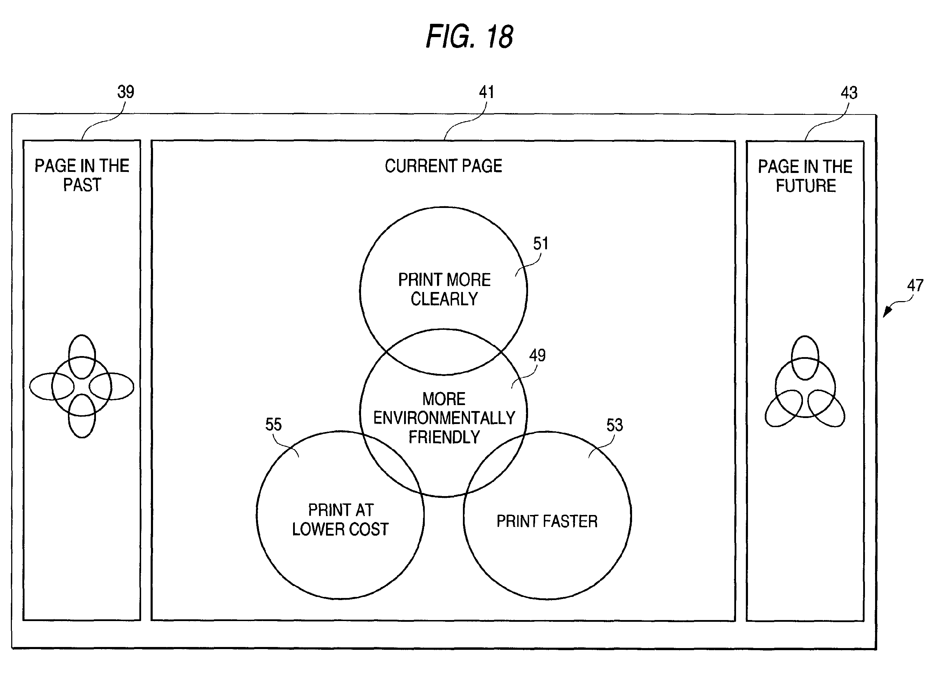

Fig. 18 is a diagram showing another variation of the screen structure for the setting or the confirmation of the printing environment for a printer driver.

A screen 47, as is the screen 37 in Fig. 16, is roughly divided among major categories, "page in the past", "current page" and "page in the future". The mid-level elements in the display areas 39, 41 and 43 for these major categories are displayed differently from those in Fig. 16.

The display in Fig. 18 is obtained when a user selects "current page". The display area 41 for "current page" is enlarged, and in the enlarged display area 41, circular display areas 49, 51, 53 and 55 for four mid-level elements are partially overlapped. specifically, the display area 49 for one mid-level element, "perform more environmentally friendly printing", is located in the center, and display areas 51, 53 and 55, for the other mid-level elements positioned around and partially overlap the central display area 49.

When on this screen 47 the user selects the display area 49 for the mid-level element "perform more environmentally friendly printing" (moves the mouse cursor to the display area 49), the display area 49 is enlarged, and low-level elements that, as was described before while referring to Fig. 17, are related to the objective or to the needs of the user when setting a condition that provides more environmentally friendly printing, are displayed in the enlarged display area 49. At this time, when a low-level elements satisfy not only the objective, "provide more environmentally friendly printing", but also another objective, such as "at a lower cost", "faster" or "more clearly", the low-level element is displayed in a corresponding area that partially overlaps the other.

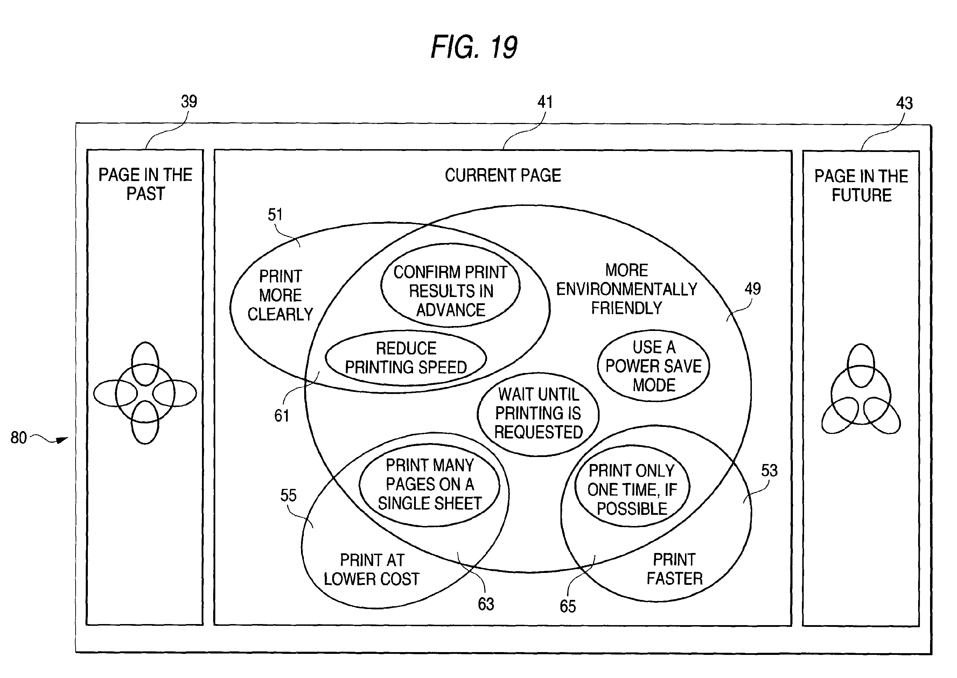

For example, as is shown in Fig. 19, in the display area 49 for "perform more environmentally friendly printing", entries for "confirm print results in advance" and "reduce printing speed" are displayed in a partial area 61 that overlaps the display area 51 for "print more clearly". Further, "print many pages on a single sheet" is displayed in a partial area 63 that overlaps the display area 55 for "print at lower cost". And "print only one time, if possible" is displayed in a partial area 65 that overlaps the display area 53 for "print faster". The remaining low-level elements, "use power saving mode" and "wait until printing is requested" are displayed in locations other than the overlapping areas 61 to 65. With the screen 80 in Fig. 19, the user can locate, at a glance, a low-level element that will "provide more environmentally friendly printing", as well as satisfying the objectives, "print at lower cost", "faster" and "more clearly", and can set a print condition that is nearer the objective or the needs of the user.

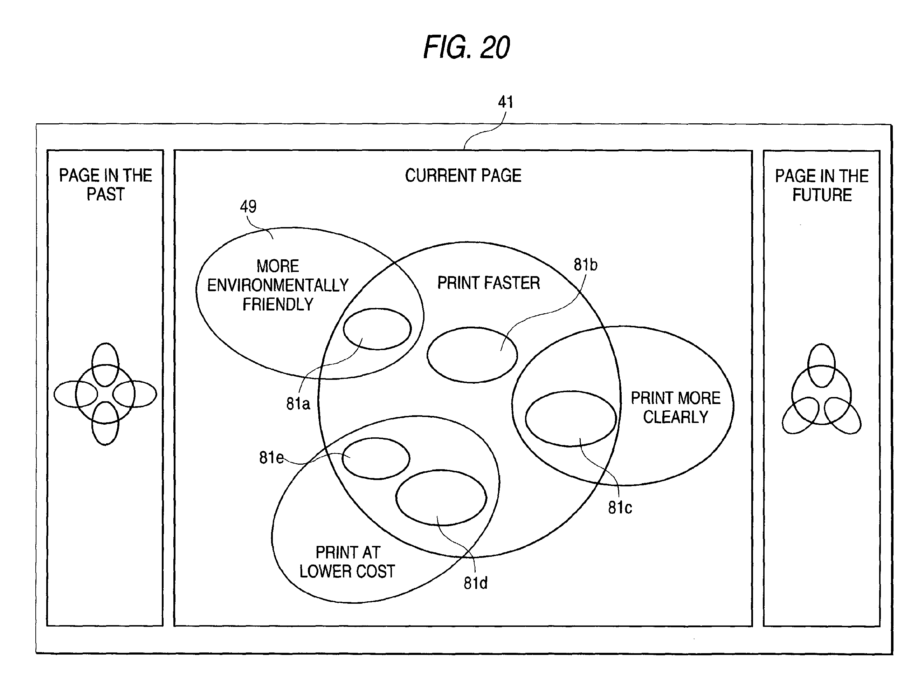

On this screen 80 (or the default screen 47 in Fig. 18), when the user selects the display area for another objective (a mid-level element), such as the display area 53 for "print faster", as is shown in Fig. 20, the display area 53 for "print faster" is positioned in the center of the display area 41 for "current page", and the display area 49 for "perform more environmentally friendly printing" is moved from the center to the periphery of the display area 53. Then, low-level elements 81a to 81d (detailed contents of the elements are not shown) that are related to the objective or to the needs of the user when setting parameters for faster printing are displayed at appropriate locations in the display area 53.

The embodiment of the present invention has been explained; however, this is merely an example of the uses to which the present invention can be put, and the areas that can be used for the present invention are not limited to those in the embodiment. The present invention can be variously modified, and the font sizes for various entries maybe enlarged or reduced, consonant with the sizes of the display areas.

## Claims

1. An information display system comprising:
means for providing, on a screen of a computer, default sized display areas for a plurality of elements each having detailed information;
means for enlarging a corresponding, default sized display area when a user selects an element from said plurality of elements;
means for displaying detailed information for said selected element in said enlarged, corresponding display area; and
means for also displaying, on said screen, those elements that were not selected so that none of said elements are hidden under said enlarged, corresponding display area.

2. An information display system according to claim 1, wherein said means for displaying said unselected elements includes means for reducing sizes of said default sized display areas for said unselected elements and for summarizing contents displayed therein.

3. An information display system according to claim 1, wherein said means for displaying said unselected elements includes means for adjusting sizes of display areas of said unselected elements to reflect a magnitude of relevancy of said unselected elements to said selected element.

4. An information display system according to claim 1, further comprising means for, when one of said plurality of elements is selected, adjusting arrangement on said display screen of said display areas for said plurality of elements.

5. An information display system according to claim 1, wherein an element that is related to an objective or the needs of the user is included in said plurality of elements.

6. An information display method comprising steps of:
providing, on a screen of a computer, default sized display areas for a plurality of elements each having detailed information;
enlarging a corresponding, default sized display area when a user selects an element from said plurality of elements;
displaying detailed information for said selected element in said enlarged, corresponding display area; and
displaying, on said screen, those elements that were not selected so that none of said elements are hidden under said enlarged, corresponding display area.

7. An information display method according to claim 6, wherein said step of displaying said unselected elements includes a step of reducing sizes of said default sized display areas for said unselected elements, and summarizing contents displayed therein.

8. An information display method according to claim 6, wherein said step of displaying said unselected elements includes a step of adjusting sizes of said display areas of said unselected elements to reflect a magnitude of relevancy of said unselected elements to said selected element.

9. An information display method according to claim 6, further comprising a step of, when one of said plurality of elements is selected adjusting arrangement on said display screen of said display areas for said plurality of elements.

10. An information display method according to claim 6, wherein an element that is related to an objective or the needs of said user is included in said plurality of elements.

11. A computer-readable recording medium for storing a program that permits a computer to perform steps of:
providing, on a screen of a computer, default sized display areas for a plurality of elements each having detailed information;
enlarging a corresponding, default sized display area when a user selects an element from said plurality of elements;
displaying detailed information for said selected element in said enlarged, corresponding display area; and
displaying, on said screen, those elements that were not selected so that none of said elements are hidden under said enlarged, corresponding display area.
